# EUROPEAN PATENT APPLICATION

(11) **EP 1 981 221 A1**
(43) Date of publication of application: **15.10.2008**
(21) Application number: 07800677.2
(22) Date of filing: 29.06.2007
(51) Int. Cl.: H04L 12/56

(54) **A SERVICE RESTORING METHOD AND DEVICE**

(30) Priority: 29.09.2006 CN 200610159989
(71) Applicant: Huawei Technologies Co., Ltd., Longgang District, Shenzhen, Guangdong 518129 (CN)
(72) Inventor: SUN, Junbai, Shenzhen, Guangdong 518129 (CN); WANG, Guangjun, Shenzhen, Guangdong 518129 (CN)
(74) Representative: Körber, Martin Hans
(86) International application number: PCT/CN2007/002030
(87) International publication number: WO 2008/037161

(57) **Abstract**

A service recovery method, on the basis that Service Level Agreement (SLA) is separated from recovery priority and when rerouting is needed, includes: acquiring recovery priority of services needing rerouting, and ranking the services needing rerouting according to the recovery priority; preferentially recovering a service with high recovery priority according to a ranking result and a predetermined link resource using and preempting order. By the present invention, it is possible to guarantee the preferential recovery and the recovery performance of the service with high recovery priority, thereby guaranteeing the recovery time and the recovery success probability.

## Description

### Field of the Invention

The present invention relates to an automatically switched optical network in the digital communication field, and particularly, to a service recovery method and apparatus for guaranteeing the preferential recovery of a service with high recovery priority on the basis that Service Level Agreement (SLA) is separated from recovery priority.

### Background of the Invention

In the prior art, Synchronous Digital Hierarchy (SDH), Synchronous Optical Network (SONET) and Optical Transport Network (OTN) are traditionally designed for transporting voice services.

Along with the rapid development of data services, the permanent connection mode with static presentation needs to be evolved into a signaling-based soft-permanent connection mode and a switched connection mode to meet the requirements of data service transport. The new type of optical transport network is referred to as an Automatically Switched Optical Network (ASON) by the International Telecommunications Union-Telecommunication Standardization Sector (ITU-T), which is implemented by introducing a control plane for establishing, modifying and maintaining a network connection and recovering the network connection in the case of network failure.

The ASON includes three planes: a service plane, a control plane and a management plane. The service plane is used for implementing the bridge switch and transport of a service, and has functions of the traditional SDH, SONET and OTN. The control plane is used for establishing a service with signalings under the support of a route function in terms of the implementation of a switched network. The management plane is used for implementing network management. In the control plane, signalings of the ASON are implemented by the General Multi-Protocol Label Switch (GMPLS) protocol developed by the Internet Engineering Task Force (IETF). The route protocol used in a single-domain is the Open Shortest Path First-Traffic Engineering (OSPF-TE) and the route protocol widely used in a multiple-domain is the Domain to Domain Route Protocol (DDRP) which is deduced by modifying the OSPF properly.

The ASON provides a user with rich Service Level Agreements (SLAs), such as a 1+1 service, a multiplex section service, a reroute service, an unprotected service and a preempted service. The former three services aim to require that a service may be protected or recovered. The recovery of the service after failure, i.e. the reroute function, is a major function of the ASON. The reroute function is implemented as follows: when there is a failure in a service path, an adjacent node detects the failure and notifies the failure to the head node of the service; the head node excludes the failed node or link and recalculates a new route, and reestablishes a service path according to the new route. In this way, the service will be recovered after the service path is established successfully.

The 1+1 service and the multiplex section service generally also have a recoverable attribute in order to improve the protection and recovery of the former two services. In other words, preferentially the protection of 1+1 service and multiplex section service is performed; if the protection fails, the recovery capability to guarantee the service transmission is used. In addition, in order to provide a user with more service selections, the recovery is generally set with different priority. Specifically, the service with high recovery priority is recovered preferentially, and even the service with high recovery priority may preempt resources allocated to the service with low recovery priority in the case of resource insufficiency so as to guarantee the preferential recovery of the service with high recovery priority.

As can be seen from the above description, in the prior art a node initiating rerouting ranks all reroute requests. For example, reroute requests with high priority are in one queue and reroute requests with low priority are in another queue. The reroute is immediately calculated for the reroute request with high priority and the reroute is calculated for the reroute request with low priority after a period of time, so as to guarantee that the recovery time for recovering a service with high recovery priority is relatively short and the recovery success probability of the service with high recovery priority is relatively high in the case of link resource sufficiency. However, the disadvantage of this method includes: it is impossible to guarantee the recovery success probability in the case of link resource insufficiency. Specifically, if the most link resources are used, especially some link resources are used by services with low recovery priority, the recovery of the service with high recovery priority fails because there is no idle link resource for the recovery of the service with high recovery priority and the service with high recovery priority can not preempt link resources allocated to services with low recovery priority.

### Summary of the Invention

In view of the above-mentioned problems in the prior art, the present invention provides a service recovery method and apparatus for guaranteeing the preferential recovery of a service with high recovery priority on the basis that Service Level Agreement (SLA) is separated from recovery priority, so as to guarantee the recovery performance of the service with high recovery priority.

A method for service recovery, on the basis that Service Level Agreement (SLA) is separated from recovery priority and when rerouting is needed, includes:
acquiring, by a head node of services needing rerouting, recovery priority of the services needing rerouting, and ranking the services needing rerouting according to the recovery priority; and
preferentially recovering a service with high recovery priority according to a ranking result and a predetermined link resource using and preempting order.

According to the method, the recovery priority includes high recovery priority, middle recovery priority and low recovery priority.

According to the method, the ranking the services needing rerouting according to the recovery priority includes:
forming a high priority First In First Out, FIFO, queue including services with the high recovery priority, a middle priority FIFO queue including services with the middle recovery priority and a low priority FIFO queue including services with the low recovery priority.

According to the method, the preferentially recovering the service with high recovery priority according to the ranking result and the predetermined link resource using and preempting order includes:
determining whether there is a service with the high recovery priority to be recovered in the high priority FIFO queue; and
recovering the service with the high recovery priority according to the predetermined link resource using and preempting order if there is a service with the high recovery priority to be recovered in the high priority FIFO queue.

According to the method, the method further includes:
determining whether there is a service with middle recovery priority to be recovered in the middle priority FIFO queue and there is a service with low recovery priority to be recovered in the low priority FIFO queue if there is no service with high recovery priority to be recovered in the high priority FIFO queue;
terminating the rerouting if there is no service with middle recovery priority in the middle priority FIFO queue and there is no service with low recovery priority in the low priority FIFO queue.

According to the method, the method further includes:
determining whether a timer is activated if there is a service with middle recovery priority in the middle priority FIFO queue and there is a service with low recovery priority in the low priority FIFO queue;
activating the timer if the timer is not activated;
determining whether the timer expires if the timer is activated.

According to the method, the method further includes:
determining whether the timer expires if the timer is activated.

According to the method, the method further includes:
determining whether there is a service with high recovery priority to be recovered in the high priority FIFO queue when the timer expires;
recovering the service with high recovery priority according to the predetermined link resource using and preempting order if there is a service with high recovery priority in the high priority FIFO queue.

According to the method, the method includes:
recovering the service with middle recovery priority and the service with low recovery priority according to the predefined link resource using and preempting order if there is no service with high recovery priority in the high priority FIFO queue.

According to the method, the recovering the service with high recovery priority, the service with middle recovery priority and the service with low recovery priority includes:
calculating, by a routing unit, a path according to the predetermined link resource using and preempting order, and notifying a signaling unit of a recovered explicit route;
initiating, by the signaling unit, a procedure of establishing the path.

According to the method, the method further includes:
establishing the path, which includes:
determining whether the link of the service with low recovery priority is preempted;
releasing bridge switch of the service with low recovery priority if the link of the service with low recovery priority is preempted; establishing new bridge switch according to rerouting requirements;
the released bridge switch being remained in a local control plane;
informing a node in the preempted link to close alarm and update state of the preempted link as "preempted".

According to the method, the method further includes:
establishing the path on an unused link if the link of the service with low recovery priority is not preempted.

According to the method, the method further includes:
recovering the service with low recovery priority if the link of the service with low recovery priority is preempted.

According to the method, the recovering service with low recovery priority includes:
releasing, by an node adjacent to the preempted link, bridge switch of the service with high recovery priority and recovering the bridge switch of the link when the service with high recovery priority preempting the link of the service with low recovery priority is deleted or returns to an original path; and
opening the alarm by signaling and updating the state of the link as "unpreempted".

According to the method, the path is calculated by a centralized calculation method or a distributed calculation method.

According to the method, the separating the SLA from the recovery priority includes:
setting SLAs of the services including a 1+1 service, a multiplex section service, a reroute service, an unprotected service and a preempted service;
setting the recovery priority of the services; and
determining the link resource using and preempting order by setting a relation between the recovery priority and the SLAs of the services;
the recovery priority includes high recovery priority, middle recovery priority and low recovery priority; the service with high recovery priority is able to preempt resources allocated to the service with low recovery priority; the service with middle recovery priority could not be preempted by other services, and are unable to preempt other services; the service with low recovery priority can be preempted by other services; the recovery priority is separated from the SLA.

According to the method, the link resource using and preempting order includes:
idle resources, resources occupied by a preempted service, resources occupied by an unprotected service with low recovery priority and resources occupied by a rerouting service with low recovery priority.

The present invention discloses an apparatus for service recovery, which includes:
a ranking unit, adapted to acquire recovery priority of services needing rerouting, and rank the services needing rerouting according to the recovery priority, the recovery priority being separated from Service Level Agreement (SLA); and
a recovery unit, adapted to preferentially recover a service with high recovery priority according to a ranking result from the ranking unit and a predefined link resource using and preempting order.

The present invention may provide a flexible service presentation mode, i.e. a service presentation mode on the basis that the SLA is separated from the recovery priority, so as to provide services to a user conveniently.

On the basis that the SLA is separated from the recovery priority, the present invention may provide a link resource using and preempting order on service recovery, so as to guarantee the preferential recovery of the service with high recovery priority.

On the basis that the SLA is separated from the recovery priority, the present invention may implement service recovery according to the service recovery priority in various cases. In the present invention, a timer is activated, and reroute requests in the queue with middle priority and low priority may not be processed before the timer expires, so as to guarantee the preferential recovery of the service with high recovery priority.

On the basis that the SLA is separated from the recovery priority, the service with high recovery priority may be recovered according to the above-mentioned link resource using and preempting order, so as to guarantee the preferential recovery and the recovery performance of the service with high recovery priority, e.g. recovery time and recovery success probability need to be guaranteed.

### Brief Description of the Drawings

Figure 1 is a schematic diagram illustrating the structure of a typical intelligent domain.
Figure 2 is a flowchart illustrating the preferential recovery of a service with high recovery priority in accordance with an embodiment of the present invention.
Figure 3 is a flowchart illustrating the recovery of a preempted service in accordance with an embodiment of the present invention.
Figure 4 is a schematic diagram of a service recovery apparatus in accordance with an embodiment of the present invention.

### Detailed Description of the Invention

The present invention provides a service recovery method, in which Service Level Agreement (SLA) is separated from recovery priority. When the rerouting is needed, the method includes: the head node of services needing rerouting ranks the services according to different recovery priorities of the services; preferentially recovering a service with high recovery priority according to a result of the ranking and a predefined link resource using and preempting order.

In accordance with the present invention, the SLA is separated from the recovery priority in a certain manner, on the basis of which a method is provided for guaranteeing that a service with high recovery priority is preferentially recovered by link resource preemption in the case of resource insufficiency. By the method, it is possible to guarantee the preferential recovery and the recovery performance of the service with high recovery priority, thereby guaranteeing the recovery time and the recovery success probability.

In this embodiment, a method is provided for separating the Service Level Agreement (SLA) from the recovery priority, so as to facilitate the user service presentation.

Referring to Table 1, a service presentation method for separating the SLA from the recovery priority in this embodiment is described.

The relation between the SLA and the recovery priority is as shown in Table 1.

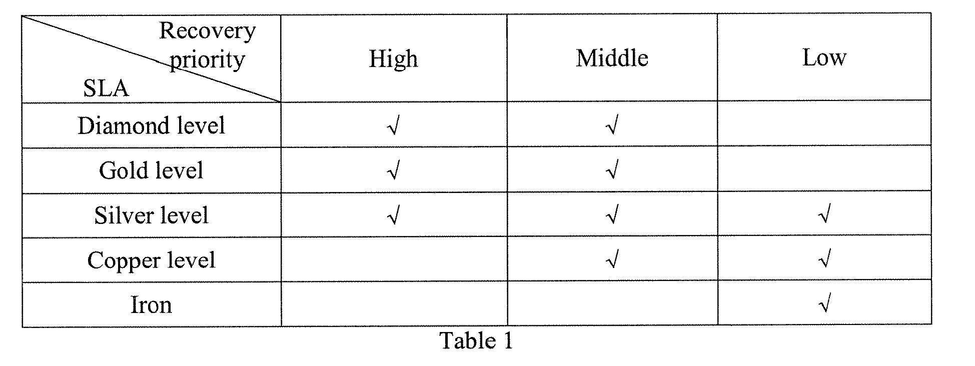

To simplify the description, the following agreements are given.

The 1+1 service is a diamond level service; the multiplex section service is a gold level service; the rerouting service is a silver level service; the unprotected service is a copper level service; the preempted service is an iron level service. The diamond level service and gold level service need rerouting protection after the original protection fails.

The recovery priority is separated from the current SLA. In other words, a service with high SLA priority has unnecessarily high recovery priority; a service with low SLA priority has unnecessarily low recovery priority.

In this embodiment, three types of recovery priority are introduced, i.e. high recovery priority, middle recovery priority and low recovery priority. The relation between different types of recovery priority is as follows.

The resources of a service with middle recovery priority could not be preempted by other services, and are unable to preempt other services;
the diamond level service and the gold level service only have the middle or high recovery priority instead of low recovery priority, and the resources of the diamond level and the gold level service also could not be preempted by other services;
the silver level service may have any one of the high recovery priority, the middle recovery priority and the low recovery priority;
the copper level service may have any one of the middle recovery priority and the low recovery priority;
the iron level service only has the low recovery priority;
the service with high recovery priority is able to preempt resources allocated to the service with low recovery priority. When the service with high recovery priority is interrupted, the resources may be used and preempted according to the following order, so as to recover the service with high recovery priority:
   Idle resources < resources occupied by an iron level service < resources occupied by a copper level service with low recovery priority < resources occupied by a silver level service with low recovery priority.

Other service presentation methods for separating the SLA from the recovery priority may be used, and other methods for dividing the service priority and the recovery priority may also be used. The link resource using and preempting order is not limited to the above manner, also has other manners.

On the basis of separating the SLA from the recovery priority, a method is provided for guaranteeing that a service with high recovery priority is preferentially recovered by the link resource preemption in the case of resource insufficiency. The method may be applicable to intra-domain services and inter-domain services. The description is hereinafter given in detail by taking an intra-domain service as an example.

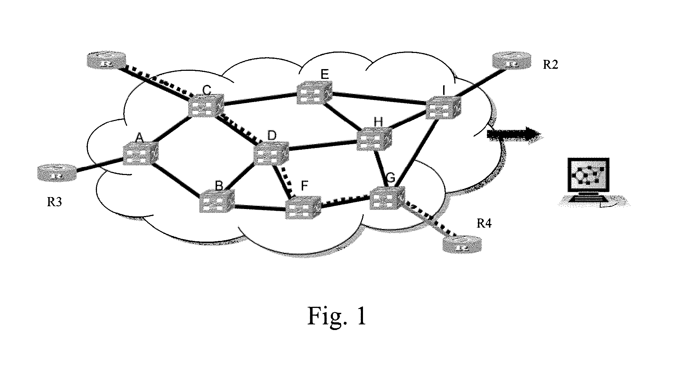

Figure 1 is a schematic diagram illustrating the structure of a typical intelligent domain. The service recovery method when rerouting is needed is hereinafter described in detail, especially in the case of resource insufficiency.

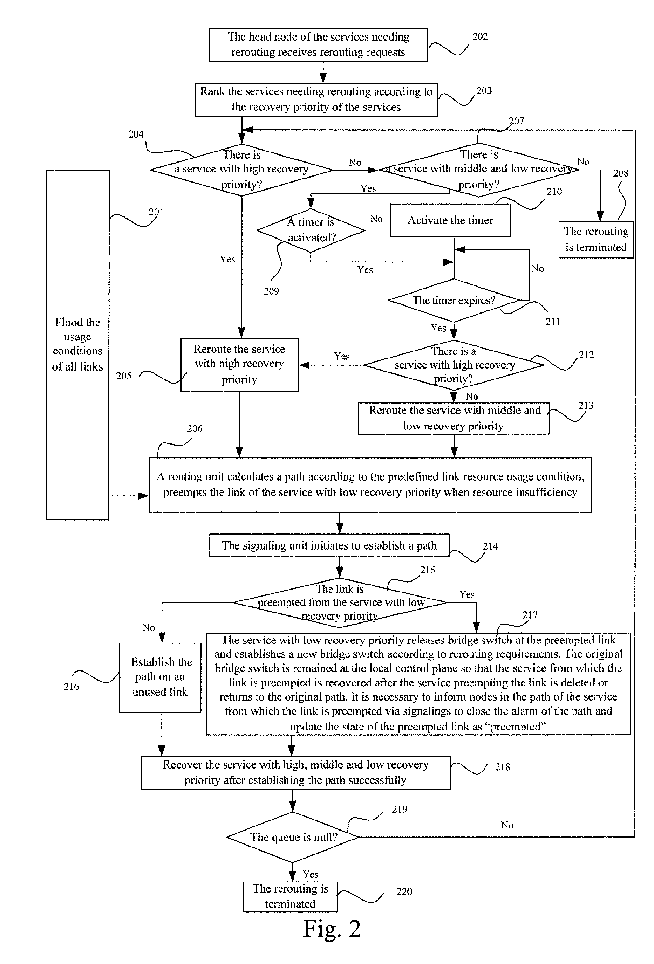

As shown in Figure 2, the service recovery method includes the following processes.

Flood usage conditions of all links in a domain via the route protocol, such that each node in the domain may obtain the usage conditions of all links; the usage conditions includes which SLA service uses the link and the recovery priority of the service on the link (Block 201).

When rerouting is needed, a head node of the services needing rerouting receives rerouting requests (Block 202).

Rank the services needing rerouting according to different recovery priority of the services at the head node of the services needing rerouting (Block 203), i.e. form three First In First Out (FIFO) queues according to high, middle and low recovery priority.

Determine whether there are services to be recovered in the high priority queue (Block 204).

Reroute the service with high recovery priority if it is determined that there are services to be recovered in the high priority queue (Block 205).

Determine whether there are services to be recovered in the middle and low priority queues (Block 207) if it is determined that there is no service to be recovered in the high priority queue in Block 204.

Terminated the rerouting (Block 208) if it is determined that there is no service to be recovered in the middle and low priority queues in Block 207.

Further determine whether a timer is activated (Block 209) if it is determined that there are services to be recovered in the middle and low priority queues in Block 207.

Activate the timer (Block 210), and then determine whether the timer expires (Block 211) if it is determined that the timer is not activated in Block 209.

Determine whether the timer expires (Block 211) if it is determined that the timer is activated in Block 209; do not perform rerouting requests in the middle and low priority queues before the timer expires.

Further determine whether there is a service with high recovery priority (Block 212) if it is determined that the timer expires in Block 211.

Perform Block 205 to reroute the service with the high recovery priority if it is determined that there is a service with high recovery priority. The preferential recovery includes improving the recovery speed and the recovery success probability. Recover services with middle or low recovery priority after the timer expires. The recovery of these services will fail if there are no sufficient link resources.

Perform the rerouting requests in the middle and low priority queues to reroute the services with middle and low priority (Block 213) if it is determined that there is no service with high recovery priority in Block 212.

After Block 205 and Block 213 are performed, i.e. after the services with high, middle and low priority are rerouted, Block 206 is performed. Specifically, a routing unit calculates a path according to the predefined link resource usage condition, and uses and preempts resources according to the following order:
idle resources < resources occupied by an iron level service < resources occupied by a copper level service with low recovery priority < resources occupied by a silver level service with low recovery priority. Afterwards, the routing unit notifies a signaling unit of a recovered explicit route. The path may be calculated by a centralized calculation method, e.g. the path may be calculated by a Path Calculation Server (PCS). Of course, the path calculation is not limited to this method, and may also use a distributed calculation method.

Afterwards, Block 214 is performed, i.e. the signaling unit initiates to establish the path.

Determine whether the link is preempted from the service with low recovery priority (Block 215) during establishing the path.

In Block 215, if it is determined that a link is preempted from a service with low recovery priority, the service with low recovery priority will release bridge switch at the preempted link and establish a new bridge switch according to rerouting requirements. However, the original bridge switch is remained at the local control plane so that the service from which the link is preempted is recovered after the service preempting the link is deleted or returns to the original path. It is necessary to inform nodes in the path of the service from which the link is preempted via signalings to close the alarm of the path and update the state of the preempted link as "preempted" (Block 217).

Establish a path on an unused link (Block 216) if it is determined that no link is preempted from the service with low recovery priority in Block 215.

Recover the services with high, middle and low recovery priority (Block 218) after establishing the path successfully.

Determine whether the high, middle and low priority queues are null (Block 219).

Return to Block 204 and repeat the above Blocks 204∼218 if it is determined that the high, middle and low priority queues are not null in Block 219.

If it is determined that the high, middle and low priority queues are null in Block 219, the rerouting is terminated (Block 220).

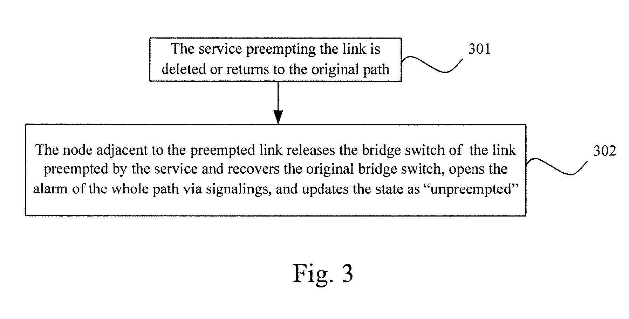

Figure 3 is a flowchart illustrating the recovery procedure of a service from which a link is preempted in accordance with an embodiment of the present invention. When a link is preempted from the service with low recovery priority, after a service preempting the link from the service with low recovery priority is recovered, the recovery procedure of the service from which the link is preempted is as follows.

When the service preempting the link is deleted or returns to the original path (Block 301), the bridge switch of the preempted link is recovered to the original bridge switch, the alarm of the whole path is opened via signalings, and the state is updated as "unpreempted" (Block 302).

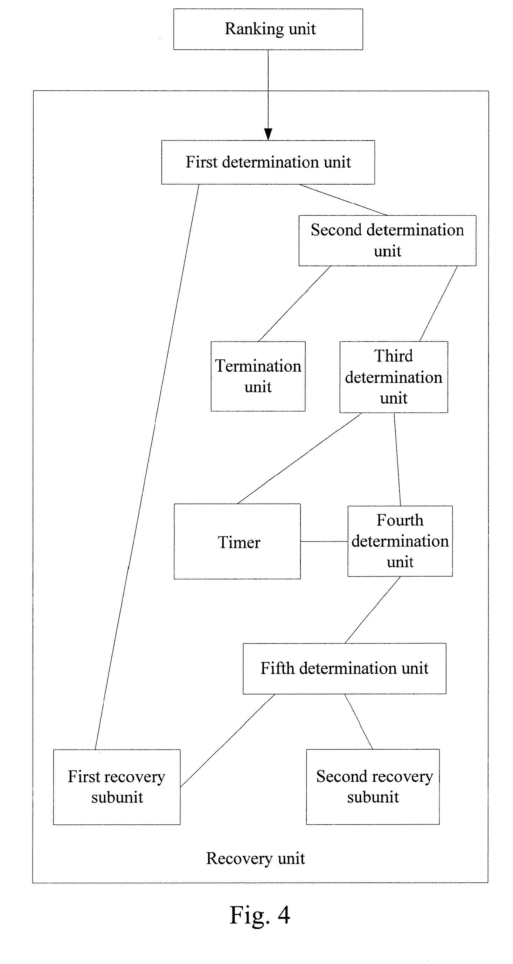

As shown in Figure 4, embodiments of the present invention further disclose a service recovery apparatus, including: a ranking unit for acquiring the recovery priority of services needing rerouting, and ranking the services needing rerouting according to the different recovery priority of the services. The recovery priority is separated from the SLA, and is divided into high, middle and low priority. The ranking unit forms three FIFO queues according to high, middle and low priority. A recovery unit is used for preferentially recovering the service with high recovery priority according to a ranking result of the ranking unit and a predefined link resource using and preempting order.

The recovery unit includes: a first determination unit, for determining whether there are services to be recovered in the high priority queue; if it is determined that there are services to be recovered in the high priority queue, activating a first recovery subunit; otherwise, activating a second determination unit; a first recovery subunit, for recovering the service with high recovery priority according to the predetermined link resource using and preempting order; a second determination unit, for determining whether there are services to be recovered in the middle and low priority queues; if it is determined that there is no service to be recovered in the middle and low priority queues, activating a termination unit; if it is determined that there are services to be recovered in the middle and low priority queues, activating a third determination unit; a termination unit, for terminating the rerouting; a third determination unit, for determining whether to activate a timer; if the timer is not activated, activating the timer and a fourth determination unit; if the timer is activated, activating a fourth determination unit; a timer, for sending an expiry result to the fourth determination unit when the timer expires; a fourth determination unit, for determining whether the timer expires; if it is determined that the timer expires, activating a fifth determination unit; a fifth determination unit, for determining whether there are services to be recovered in the high priority queue; if it is determined that there are services to be recovered in the high priority queue, activating a first recovery subunit; if it is determined that there is no service to be recovered in the high priority queue, activating a second recovery subunit; and a second recovery subunit, for recovering the service with middle or low recovery priority according to the predefined link resource using and preempting order.

The present invention is described by taking an intra-domain service as an example, but is not limited to the intra-domain service, and is also applicable to an inter-domain service. There are two situations for rerouting an inter-domain service: the rerouting caused by some inter-domain link fails and the rerouting caused by some intra-domain link or inter-domain link fails. In the second situation, the deployment is only slightly different in link abstract, route calculation and signaling.

As can be seen from the above embodiments, the present invention provides a flexible service presentation method, i.e. the service presentation method for separating the SLA from the recovery priority, and implements the method for recovering the services according to the service recovery priority in various cases based on the above method, so as to guarantee the preferential recovery and the recovery performance of the service with high recovery priority including the recovery time and the recovery successful probability.

The above embodiments are only illustrative of the present invention, and are not used for limiting the protection scope of the present invention.

## Claims

1. A method for service recovery, on the basis that Service Level Agreement, SLA, is separated from recovery priority and when rerouting is needed, comprising:
acquiring, by a head node of services needing rerouting, recovery priority of the services needing rerouting, and ranking the services needing rerouting according to the recovery priority; and
preferentially recovering a service with high recovery priority according to a ranking result and a predetermined link resource using and preempting order.

2. The method of Claim 1, wherein the recovery priority comprises high recovery priority, middle recovery priority and low recovery priority;
the ranking the services needing rerouting according to the recovery priority comprises:
forming three First In First Out, FIFO, queues according to the high recovery priority, the middle recovery priority and the low recovery priority; and
preferentially recovering the service with high recovery priority according to the ranking result and the predetermined link resource using and preempting order comprises:
determining whether there is a service with the high recovery priority to be recovered in the high priority FIFO queue; and
recovering the service with the high recovery priority according to the predetermined link resource using and preempting order if there is a service with the high recovery priority to be recovered in the high priority FIFO queue.

3. The method of Claim 2, further comprising:
determining whether there is a service with middle recovery priority to be recovered in the middle priority FIFO queue and there is a service with low recovery priority to be recovered in the low priority FIFO queue if there is no service with high recovery priority to be recovered in the high priority FIFO queue;
terminating the rerouting if there is no service with middle recovery priority in the middle priority FIFO queue and there is no service with low recovery priority in the low priority FIFO queue;
determining whether a timer is activated if there is a service with middle recovery priority in the middle priority FIFO queue and there is a service with low recovery priority in the low priority FIFO queue;
activating the timer if the timer is not activated;
determining whether the timer expires.

4. The method of Claim 3, further comprising:
determining whether the timer expires if the timer is activated;
determining whether there is a service with high recovery priority to be recovered in the high priority FIFO queue when the timer expires;
recovering the service with high recovery priority according to the predetermined link resource using and preempting order if there is a service with high recovery priority in the high priority FIFO queue; and
recovering the service with middle recovery priority and the service with low recovery priority according to the predefined link resource using and preempting order if there is no service with high recovery priority in the high priority FIFO queue.

5. The method of Claim 2 or 4, wherein the recovering the service with high recovery priority, the service with middle recovery priority and the service with low recovery priority comprises:
calculating, by a routing unit, a path according to the predetermined link resource using and preempting order and notifying a signaling unit of a recovered explicit route; and
initiating, by the signaling unit, a procedure of establishing the path.

6. The method of Claim 5, wherein the establishing the path comprises:
determining whether the link of the service with low recovery priority is preempted;
releasing bridge switch of the service with low recovery priority if the link of the service with low recovery priority is preempted; establishing new bridge switch according to rerouting requirements; the released bridge switch being remained in a local control plane; informing a node in the preempted link to close alarm and update state of the preempted link as "preempted"; and
establishing the path on an unused link if the link of the service with low recovery priority is not preempted.

7. The method of Claim 6, further comprising:
if the link of the service with low recovery priority is preempted,
releasing, by an node adjacent to the preempted link, bridge switch of the service with high recovery priority and recovering the bridge switch of the link when the service with high recovery priority preempting the link of the service with low recovery priority is deleted or returns to an original path; and
opening the alarm and updating the state of the link as "unpreempted".

8. The method of Claim 1, wherein the SLA being separated from the recovery priority comprises:
setting SLAs of the services;
setting the recovery priority of the services; and
determining the link resource using and preempting order by setting a relation between the recovery priority and the SLAs of the services; the recovery priority includes high recovery priority, middle recovery priority and low recovery priority; the service with high recovery priority is able to preempt resources allocated to a service with low recovery priority.

9. The method of Claim 8, wherein the link resource using and preempting order comprises:
idle resources, resources occupied by a preempted service, resources occupied by an unprotected service with low recovery priority and resources occupied by a rerouting service with low recovery priority.

10. An apparatus for service recovery, comprising:
a ranking unit, adapted to acquire recovery priority of services needing rerouting, and rank the services needing rerouting according to the recovery priority, wherein the recovery priority is separated from Service Level Agreement, SLA; and
a recovery unit, adapted to preferentially recover a service with high recovery priority according to a ranking result from the ranking unit and a predefined link resource using and preempting order.

11. The apparatus of Claim 10, wherein the recovery priority comprises high recovery priority, middle recovery priority and low recovery priority;
the ranking unit forms three First In First Out, FIFO, queues; and the recovery unit comprises:
a first determination unit, adapted to determine whether there is a service with high recovery priority to be recovered in the high priority FIFO queue; and
a first recovery subunit, adapted to recover the service with high recovery priority according to the predefined link resource using and preempting order if the first determination unit determines that there is the service with high recovery priority to be recovered in the high priority FIFO queue.

12. The apparatus of Claim 11, wherein the recovery unit further comprises: a second determination unit and a termination unit; the second determination unit is activated if the first determination unit determines that there is no service with high recovery priority to be recovered in the high priority FIFO queue; and
the second determination unit is adapted to determine whether there is a service with middle recovery priority to be recovered in the middle priority FIFO queue and there is a service with low recovery priority to be recovered in the low priority FIFO queue;
the termination unit is activated if the second determination unit determines that there is no service with middle recovery priority to be recovered in the middle priority queue and there is no service with low recovery priority to be recovered in the low priority queue;
the termination unit is adapted to terminate the rerouting.

13. The apparatus of Claim 12, wherein the recovery unit further comprises: a third determination unit, a timer and a fourth determination; the third determination unit is activated if the second determination unit determines that there is a service with middle recovery priority to be recovered in the middle priority FIFO queue and there is a service with low recovery priority to be recovered in the low priority FIFO queue; the third determination unit is adapted to determine whether the timer is activated and activate the timer if the timer is not activated; and activate the fourth determination if the timer is activated;
the timer is adapted to send an expiring result to the fourth determination unit if the timer expires;
the fourth determination unit is adapted to determines whether the timer expires.

14. The apparatus of Claim 13, wherein the recovery unit further comprises a fifth determination unit; the unit is activated if the fourth determination unit determines that the timer expires;
the fifth determination unit is adapted to determine whether there is a service with high recovery priority in the high priority FIFO queue; and activate the first recovery subunit if the fifth determination unit determines that there is a service with high recovery priority in the high priority FIFO queue.

15. The apparatus of Claim 14, wherein the recovery unit further comprises:
a second recovery subunit, adapted to recover the service with middle recovery priority and the service with low recovery priority according to the predefined link resource using and preempting order if the fifth determination unit determines that there is no service with high recovery priority in the high priority queue.
